# FASCICULE DE BREVET EUROPEEN

(11) **EP 1 681 127 B1**
(45) Date de publication et mention de la délivrance du brevet: **13.08.2008**
(21) Numéro de dépôt: 05301099.7
(22) Date de dépôt: 22.12.2005
(51) Int. Cl.: B23K 26/06

(54) **Coupage laser avec lentille à double focale de pièces métalliques de forte épaisseur**
Laserschneiden mit einer Linse mit einer doppelten Fokale von metallischen Werkstücken mit einer hohen Dicke
Laser cutting with a dual-focal-lens of metallic workpieces of high thickness

(30) Priorité: 12.01.2005 FR 0550104
(43) Date de publication de la demande: 19.07.2006
(73) Titulaire: L'AIR LIQUIDE, Société Anonyme pour l'Etude et l'Exploitation des Procédés Georges Claude, 75007 Paris (FR)
(72) Inventeur: Bertez, Christophe, 95490, Vaureal (FR); Chouf, Karim, 92300, Levallois Perret (FR); Maazaoui, Hakim, 95800, Cergy Pontoise (FR)
(74) Mandataire: Pittis, Olivier

(56) Documents cités:
- WO-A-98/14302
- WO-A-03/018246
- DE-A1- 19 947 104
- US-A1- 2001 019 044

## Description

L'invention concerne un procédé de coupage par faisceau laser selon le préambule de la revendication 1 mettant en oeuvre une lentille à double focalisation et à longueur focale choisie.

Un procédé de coupage laser met classiquement en oeuvre un faisceau laser issu, par exemple d'une machine laser de type CO₂ (λ=10,6 µm) ou YAG, lequel faisceau est focalisé par un élément optique, généralement une lentille ou un miroir, de longueur focale donnée, sur la pièce à découper. Un gaz d'assistance sous pression est habituellement injecté dans la saignée de découpe de manière à évacuer le métal fondu. La saignée de coupe est alors créée par déplacement relatif, par rapport à la pièce à couper, de la tête de coupe comprenant l'élément de focalisation délivrant le faisceau et délivrant le gaz d'assistance.

Les optiques de focalisation transmissives, c'est-à-dire les lentilles, sont les éléments les plus utilisés pour la découpe laser, car elles permettent de créer une cavité étanche sous pression dans la tête découpe dans laquelle le gaz d'assistance peut être injecté et sortir ensuite par une tuyère coaxiale au faisceau laser.

Une lentille de focalisation comporte deux dioptres ou faces, sur lesquels est déposé un traitement anti-réfléchissant destiné à limiter les pertes de puissance par réflexion.

Le matériau du « coeur »de la lentille est souvent du séléniure de zinc pour les lasers de type CO₂ et de la silice fondue, du verre (bk7), du quartz ou analogue pour les lasers de type YAG.

Actuellement, les différentes formes de lentille principalement utilisées sont :
- les lentilles plan-convexe composées d'un dioptre sphérique et d'un dioptre plan,
- les lentilles ménisques composées de deux dioptres sphériques. Cette forme de lentille a l'avantage de minimiser les aberrations de sphéricité par rapport aux lentilles plan-convexe et, est pour cette raison, très largement utilisée en découpe laser.
- les lentilles asphériques, pour lesquelles la forme du premier dioptre n'est plus une sphère de rayon constant mais est optimisée de manière à réduire encore les aberrations géométriques par rapport à la lentille ménisque à dioptres sphériques et obtenir ainsi des plus grandes densités de puissance au point de focalisation, en particulier dans le cas des longueurs focales courtes, c'est-à-dire inférieures à 95,25 mm (3,75"). Le dioptre de sortie des lentilles asphériques est généralement plan pour réduire leur coût de fabrication.

Toutes ces lentilles tendent à focaliser le faisceau laser en un point de focalisation unique de taille minimale.

Un procédé selon le préambule de la revendication 1, de découpe laser utilisant une optique à plusieurs points de focalisation améliorant les performances du procédé de découpe laser est enseigné par le document WO-A-98/14302. La forme de cette optique, qui est de type lentille ou miroir, est telle que le faisceau incident n'est plus focalisé en un seul point mais en deux (lentille à double focale) ou davantage de points de focalisation (lentille à multi-focale).

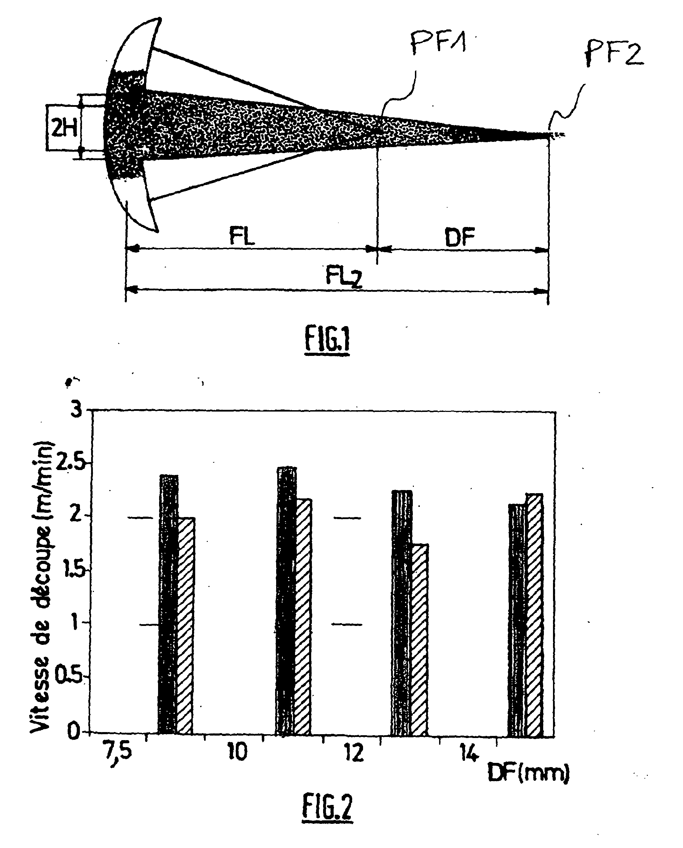

Plus précisément, comme montré en figure 1, lorsqu'on utilise une lentille LF à double focale, la partie du faisceau incident située à l'extérieur d'un diamètre égal à 2H est focalisée en un premier point focal PF1 situé à une longueur focale principale FL ; La partie du faisceau laser incident située à l'intérieur du diamètre égal à 2H est, quant à elle, focalisée en un deuxième point focal PF2 situé à une distance DF après le premier point focal PF1 dans le sens de la propagation de la lumière. Cette lentille de focalisation LF à double point de focalisation est réalisée avec un rayon de courbure d'un des dioptres, celui de la face convexe par exemple, différent à l'intérieur et à l'extérieur du diamètre 2H.

Ce type d'optique de focalisation permet d'obtenir des gains de vitesse, de qualité de coupe et de tolérance par rapport aux variations de la distance entre la lentille et la pièce et permet aussi de couper des matériaux plus épais que les lentilles conventionnelles à un seul point de focalisation.

Malgré l'enseignement de ce document, on a constaté en pratique qu'obtenir une découpe efficace et de qualité pour certaines épaisseurs à couper pouvait poser problème.

Ainsi, un problème récurrent se pose lors du coupage de plaques ou pièces métalliques ayant une épaisseur comprise entre 4 et 25 mm, de préférence entre 5 et 20 mm pour lesquelles on a constaté qu'il était nécessaire d'utiliser des lentilles de longueur focale supérieures à 130 mm pour obtenir des performances de coupe acceptables.

Généralement ces épaisseurs se découpent avec des focales standardisées de 190.5 mm (7.5 pouces) ou 228.6mm (9 pouces) étant donné qu'avec des focales plus courtes, il est très difficile de découper ces épaisseurs. Ainsi, au-delà de 5mm d'épaisseur, il se forme systématiquement des bavures à la partie inférieure de la saignée de coupe notamment.

Le but de la présente invention est de proposer une solution à ce problème, c'est-à-dire de proposer un procédé de découpe par laser avec lentille à double focale efficace de pièces ayant une épaisseur comprise entre 5 et 20 mm.

La solution de l'invention est un procédé de découpage par faisceau laser d'une pièce métallique selon la revendication 1.

Selon le cas, le procédé de l'invention peut comprendre l'une ou plusieurs des caractéristiques suivantes :
- la lentille présente une longueur focale comprise entre 180 et 200 mm.
- la lentille présente une longueur focale égale à 190.5 mm.
-
- le diamètre de la lentille est compris entre 4 et 15 mm.
- on découpe une pièce ayant une épaisseur comprise entre 5 et 20 mm, de préférence entre 6 et 12 mm.
- la distance entre les deux points de focalisation est comprise entre 5 et 12 mm.
- la distance entre les deux points de focalisation est comprise entre 7 et 10 mm.
- la pièce métallique est en acier inoxydable, acier doux, en aluminium ou en alliage d'aluminium, en titane ou alliage de titane, en cuivre ou alliage de cuivre
- on met en oeuvre un gaz d'assistance contenant de l'azote.
- le faisceau laser à une puissance comprise entre 0,5 et 20 kW, de préférence entre 1 et 6 kW.
- le faisceau laser est émis par un dispositif laser de type CO₂.

Lorsqu'ils se sont attaché à la résolution du problème ci-dessus, les inventeurs de la présente invention ont noté que le processus de découpe laser avec lentille à double focale était conditionné par les paramètres de la lentille utilisée, à savoir sa longueur focale FL, son 2H et son DF, comme représenté sur la figure 1.

Le 2H de la lentille correspond au diamètre de la partie située au centre de la lentille présentant un rayon de courbure différent de celui de la partie extérieure de la lentille. La partie du faisceau incident située à l'extérieur du diamètre 2H est focalisée en un premier point focal PF1 situé à une longueur focale principale FL. La partie du faisceau incident située à l'intérieur du diamètre 2H est focalisée en un second point focal PF2 situé à une longueur focale principale FL2. La taille du diamètre du 2H détermine la quantité d'énergie focalisée au niveau du second point de focalisation PF2.

La distance DF correspond, quant à elle, à la différence entre les longueurs focales FL et FL2, comme montré en Figure 1.

### Exemple

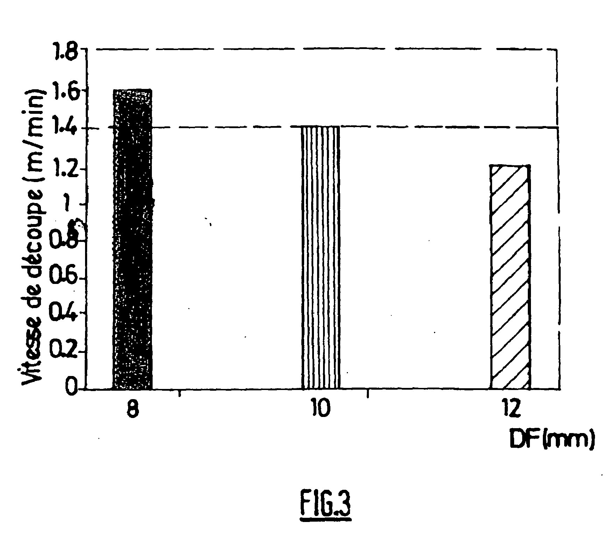

Des essais réalisés sur de l'acier inoxydable d'épaisseur 6 mm et 8 mm, dont les résultats sont représentés en Figures 2 et 3, respectivement, confirment que pour des épaisseurs comprises entre 4 et 20 mm, respectivement, il convient d'utiliser des lentilles à double focalisation de longueur focale FL=190.5 mm et ayant, en outre, des valeurs de 2H comprises entre 4 mm et 15 mm.

Les résultats ont été obtenus :
- pour des pressions de 16 bar (barres grisées) et de 19 bars (barres noircies) en Figure 2 en utilisant, dans les deux cas, une lentille à double focale.
- pour une pressions de 19 bar (en figure 3) et en utilisant soit une lentille à double focale (barre noircie), soit, à titre comparatif, une lentille classique monofocale (barres grisées).

Il ressort que, pour la longueur focale FL=190.5 mm et les valeurs de 2H précédentes, les meilleures performances de découpe laser ont été obtenues pour des valeurs de DF compris entre 7 et 10 mm, comme visible sur la Figure 2.

Pour l'épaisseur de tôle de 8 mm (Fig. 3), la lentille double focale avec une distance DF égale à 8 mm permet d'obtenir des gains en vitesse avec une qualité de coupe inégalée avec les autres valeurs de DF testées, en particulier une absence de bavure.

Pour ces valeurs de FL, de DF et de 2H, la répartition énergétique d'énergie laser absorbée dans la saignée de coupe devient optimale. De plus, la largeur de saignée devient suffisante pour permettre une bonne pénétration du gaz et une évacuation du métal fondu optimale.

## Revendications

1. Procédé de découpage par faisceau laser d'une pièce métallique ayant une épaisseur comprise entre 5 et 20 mm, dans lequel on met en oeuvre une lentille à double focalisation permettant de focaliser le faisceau laser en au moins un premier (PF1) et un deuxième (PF2) points de focalisation distincts l'un de l'autre et situés sur l'axe du faisceau laser, **caractérisé en ce que** la lentille présente une longueur focale (FL) comprise entre 170 et 300 mm, et **en ce que** la lentille présente une partie centrale de diamètre (2H) présentant un premier rayon de courbure pour focaliser le premier point de focalisation (PF1) à la longueur focale (FL), ledit diamètre (2H) étant inférieur à 20 mm.

2. Procédé selon la revendication 1, **caractérisé en ce que** la lentille présente une longueur focale (FL) comprise entre 180 et 200 mm.

3. Procédé selon la revendication 1 ou 2, **caractérisé en ce que** la lentille présente une longueur focale (FL) égale à 190.5 mm.

4. Procédé selon la revendication 1, **caractérisé en ce que** le diamètre (2H) de la lentille est compris entre 4 et 15 mm.

5. Procédé selon la revendication 1 à 4, **caractérise en ce que** l'on découpe une pièce ayant une épaisseur comprise entre 6 et 12 mm.

6. Procédé selon la revendication 1 à 5, **caractérisé en ce que** la distance (DF) entre les deux points de focalisation (PF1, PF2) est comprise entre 5 et 12 mm.

7. Procédé selon la revendication 6, **caractérisé en ce que** la distance (DF) entre les deux points de focalisation (PF1, PF2) est comprise entre 7 et 10 mm.

8. Procédé selon la revendication 1 à 7, **caractérisé en ce que** la pièce métallique est en acier inoxydable, acier doux, en aluminium ou en alliage d'aluminium, en titane ou alliage de titane, en cuivre ou alliage de cuivre

9. Procédé selon la revendication 1 à 8, **caractérisé en ce qu'**on met en oeuvre un gaz d'assistance contenant de l'azote.

10. Procédé selon la revendication 1 à 10, **caractérisé en ce que** le faisceau laser à une puissance comprise entre 0,5 et 20 kW, de préférence entre 1 et 6 kW.

11. Procédé selon la revendication 1 à 10, **caractérisé en ce que** le faisceau laser est émis par un dispositif laser de type CO₂.

## Claims

1. Method for laser-beam cutting a metal workpiece having a thickness of between 5 and 20 mm, in which a double focusing lens is employed making it possible to focus the laser beam at least at a first focusing point (FP1) and a second focusing point (FP2) which are separate from each other and lie on the laser optical axis, **characterized in that** the lens has a focal length (FL) of between 170 and 300 mm, and **in that** the lens has a central part of diameter (2H) having a first radius of curvature for focusing the first focusing point (FP1) at the focal length (FL), the said diameter (2H) being less than 20 mm.

2. Method according to Claim 1, **characterized in that** the lens has a focal length (FL) of between 180 and 200 mm.

3. Method according to Claim 1 or 2, **characterized in that** the lens has a focal length (FL) equal to 190.5 mm.

4. Method according to Claim 1, **characterized in that** the diameter (2H) of the lens is between 4 and 15 mm.

5. Method according to Claims 1 to 4, **characterized in that** a workpiece having a thickness lying between 6 and 12 mm is cut.

6. Method according to Claims 1 to 5, **characterized in that** the distance (DF) between the two focusing points (FP1, FP2) is between 5 and 12 mm.

7. Method according to Claim 6, **characterized in that** the distance (DF) between the two focusing points (FP1, FP2) is between 7 and 10 mm.

8. Method according to Claims 1 to 7, **characterized in that** the metal workpiece is made of stainless steel, mild steel, aluminium or an aluminium alloy, titanium or a titanium alloy, copper or an copper alloy.

9. Method according to Claims 1 to 8, **characterized in that** an assisting gas containing nitrogen is used.

10. Method according to Claims 1 to 9, **characterized in that** the laser beam has a power of between 0.5 and 20 kW, preferably between 1 and 6 kW.

11. Method according to Claims 1 to 10, **characterized in that** the laser beam is emitted by a laser device of the CO₂ type.

## Patentansprüche

1. Verfahren zum Laserstrahlschneiden eines metallischen Werkstücks mit einer Dicke zwischen 5 und 20 mm, wobei in dem Verfahren eine Linse mit doppelter Fokussierung eingesetzt wird, die das Fokussieren des Laserstrahls auf mindestens einen ersten (PF1) und einen zweiten (PF2) Fokussierungspunkt, die sich voneinander unterscheiden und sich auf der Achse des Laserstrahls befinden, ermöglichen, **dadurch gekennzeichnet, dass** die Linse eine Brennweite (FL) aufweist, die zwischen 170 und 300 mm beträgt, und dass die Linse einen mittleren Teil mit einem Durchmesser (2H), der einen ersten Krümmungsradius aufweist, zum Fokussieren des ersten Fokussierungspunkts (PF1) mit der Brennweite (FL) aufweist, wobei der Durchmesser (2H) kleiner als 20 mm ist.

2. Verfahren nach Anspruch 1, **dadurch gekennzeichnet, dass** die Linse eine Brennweite (FL) aufweist, die zwischen 180 und 200 mm beträgt.

3. Verfahren nach Anspruch 1 oder 2, **dadurch gekennzeichnet, dass** die Linse eine Brennweite (FL) aufweist, die gleich 190,5 mm ist.

4. Verfahren nach Anspruch 1, **dadurch gekennzeichnet, dass** der Durchmesser (2H) der Linse zwischen 4 und 15 mm beträgt.

5. Verfahren nach den Ansprüchen 1 bis 4, **dadurch gekennzeichnet, dass** ein Werkstück mit einer Dicke zwischen 6 und 12 mm geschnitten wird.

6. Verfahren nach den Ansprüchen 1 bis 5, **dadurch gekennzeichnet, dass** der Abstand (DF) zwischen den zwei Fokussierungspunkten (PF1, PF2) zwischen 5 und 12 mm beträgt.

7. Verfahren nach Anspruch 6, **dadurch gekennzeichnet, dass** der Abstand (DF) zwischen den zwei Fokussierungspunkten (PF1, PF2) zwischen 7 und 10 mm beträgt.

8. Verfahren nach den Ansprüchen 1 bis 7, **dadurch gekennzeichnet, dass** das metallische Werkstück aus nicht rostendem Stahl, Flussstahl, Aluminium oder Aluminiumlegierung, Titan oder Titanlegierung, Kupfer oder Kupferlegierung hergestellt ist.

9. Verfahren nach den Ansprüchen 1 bis 8, **dadurch gekennzeichnet, dass** ein Hilfsgas eingesetzt wird, das Stickstoff enthält.

10. Verfahren nach den Ansprüchen 1 bis 9, **dadurch gekennzeichnet, dass** der Laserstrahl eine Stärke aufweist, die zwischen 0,5 und 20 kW, vorzugsweise zwischen 1 und 6 kW beträgt.

11. Verfahren nach den Ansprüchen 1 bis 10, **dadurch gekennzeichnet, dass** der Laserstrahl von einer CO₂-Laservorrichtung abgegeben wird.
